(19) **Europäisches Patentamt / European Patent Office / Office européen des brevets**

(11) **EP 3 075 947 B1**

(12) # FASCICULE DE BREVET EUROPEEN

(45) Date de publication et mention de la délivrance du brevet:
**14.06.2023 Bulletin 2023/24**

(21) Numéro de dépôt: **16305379.6**

(22) Date de dépôt: **31.03.2016**

(51) Classification Internationale des Brevets (IPC):
**E21B 41/00** (2006.01)   **G01V 99/00** (2009.01)

(52) Classification Coopérative des Brevets (CPC):
**E21B 41/00**

(54) **PROCEDE D'EXPLOITATION DES HYDROCARBURES D'UN BASSIN SEDIMENTAIRE, AU MOYEN D'UNE SIMULATION DE BASSIN**

VERFAHREN ZUR KOHLENWASSERSTOFFGEWINNUNG IN EINEM SEDIMENTBECKEN MITHILFE EINER SIMULATION DES BECKENS

METHOD FOR MINING HYDROCARBONS FROM A SEDIMENTARY BASIN, BY MEANS OF A BASIN SIMULATION

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **03.04.2015 FR 1552919**

(43) Date de publication de la demande:
**05.10.2016 Bulletin 2016/40**

(73) Titulaire: **IFP Energies nouvelles
92500 Rueil-Malmaison (FR)**

(72) Inventeurs:
• **CACAS-STENTZ, Marie-Christine
92500 RUEIL-MALMAISON (FR)**
• **DUCROS, Mathieu
92500 RUEIL-MALMAISON (FR)**
• **ROUCHON, Virgile
92210 SAINT-CLOUD (FR)**
• **WOLF, Sylvie
92500 Rueil-Malmaison (FR)**

(74) Mandataire: **IFP Energies nouvelles
Département Propriété Industrielle
Rond Point de l'échangeur de Solaize
BP3
69360 Solaize (FR)**

• Eduardo Martinez: "Shale Gas Evaluation -Exploration", , 27 novembre 2012 (2012-11-27), XP055249896, Extrait de l'Internet: URL:http://www.geosoc.fr/numero-actuel/doc _download/135-shale-gas-evaluation-explora tion.html [extrait le 2016-02-15]
• F. SCHNEIDER ET AL: "A 3d Basin Model for Hydrocarbon Potential Evaluation: Application to Congo Offshore", OIL & GAS SCIENCE & TECHNOLOGY: REVUE DE L'INSTITUT FRANCAIS DU PETROLE, vol. 55, no. 1, 1 janvier 2000 (2000-01-01), pages 3-13, XP055249975, FR ISSN: 1294-4475, DOI: 10.2516/ogst:2000001
• Maria-Fernanda Romero-Sarmiento ET AL: "Predicting TOC, Organic Porosity and Gas Retention Distribution in a Shale-Gas System Using Petroleum Basin Modelling", Proceedings of the AAPG 2012 Annual Convention & Exhibition, 25 avril 2012 (2012-04-25), pages 1-22, XP055075232, Long Beach, California, USA Extrait de l'Internet: URL:http://www.searchanddiscovery.com/docu ments/2012/40973romero/ndx_romero.pdf [extrait le 2013-08-14]

(56) Documents cités:
**US-A1- 2010 081 184    US-A1- 2015 066 461**

• Fréderic Schneider ET AL: "PREDICTION OF LOW-MATURITY / BIOGENIC GAS ACCUMULATIONS: APPLICATION TO THE OFFSHORE LEBANON", , 1 January 2013 (2013-01-01), XP055684927, DOI: 10.13140/RG.2.2.13657.72807 Retrieved from the Internet: URL:https://www.researchgate.net/publicati on/308648439_PREDICTION_OF_LOW-MATURI TY_BI OGENIC_GAS_ACCUMULATIONS_APPLICATIO N_TO_TH E_OFFSHORE_LEBANON [retrieved on 2020-04-09]

**Description**

La présente invention concerne le domaine de l'exploration et de l'exploitation des gisements pétroliers ou de sites de stockage géologique de gaz.

L'exploration pétrolière consiste à rechercher des gisements d'hydrocarbures au sein d'un bassin sédimentaire. La compréhension des principes de la genèse des hydrocarbures et leurs liens avec l'histoire géologique du sous-sol, a permis la mise au point de méthodes d'évaluation du potentiel pétrolier d'un bassin sédimentaire. La démarche générale de l'évaluation du potentiel pétrolier d'un bassin sédimentaire comporte des allers-retours entre

- une prédiction du potentiel pétrolier du bassin sédimentaire, réalisée à partir d'informations disponibles concernant le bassin étudié (affleurements, campagnes sismiques, forages par exemple). Cette prédiction vise :

  - à mieux comprendre l'architecture et l'histoire géologique du bassin étudié, notamment à étudier si des processus de maturation et de migration d'hydrocarbures ont pu se mettre en place ;

  - à identifier les zones du sous-sol dans lesquelles ces hydrocarbures ont pu s'accumuler ;

  - à définir quelles zones présentent le meilleur potentiel économique, évalué à partir du volume et de la nature des hydrocarbures probablement piégés (viscosité, taux de mélange avec de l'eau, composition chimique, etc), ainsi que de leur coût d'exploitation (contrôlé par exemple par la profondeur et la pression de fluide).

- des forages d'exploration dans les différentes zones présentant le meilleur potentiel, afin de confirmer ou infirmer le potentiel prédit préalablement, et d'acquérir de nouvelles données pour alimenter de nouvelles études plus précises.

L'exploitation pétrolière d'un gisement consiste, à partir des informations récoltées lors de la phase d'exploration pétrolière, à sélectionner les zones du gisement présentant le meilleur potentiel pétrolier, à définir des schémas d'exploitation optimaux pour ces zones (par exemple à l'aide d'une simulation de réservoir, afin de définir les nombre et positions des puits d'exploitation permettant une récupération d'hydrocarbures optimale), à forer des puits d'exploitation et, de façon générale, à mettre en place les infrastructures de production nécessaires au développement du gisement.

Dans certains bassins sédimentaires, ayant subi une histoire géologique compliquée, faisant interagir de nombreux processus physiques, ou lorsque le volume de données est très important, l'évaluation du potentiel pétrolier d'un bassin sédimentaire requiert de disposer d'outils informatiques permettant la synthèse des données disponibles, et d'outils informatiques permettant la simulation de l'histoire géologique et des multiples processus physiques qui la contrôlent. Il s'agit d'une démarche dite de "modélisation de bassin". La famille des logiciels dits de modélisation de bassin permettent de simuler en une, deux ou trois dimensions, les processus sédimentaires, tectoniques, thermiques, hydrodynamiques et de chimie organique et inorganique qui interviennent lors de la formation d'un bassin pétrolier. La modélisation de bassin comporte classiquement trois étapes :

- une étape de construction d'une représentation maillée du bassin étudié, connue sous le terme de géo-modélisation. Cette représentation maillée est le plus souvent structurée en couches, c'est-à-dire qu'un groupe de mailles est affecté à chaque couche géologique du bassin modélisé. Puis, chaque maille de cette représentation maillée est remplie par une ou plusieurs propriétés pétrophysiques, telles que la porosité, le faciès (argile, sable, etc) ou encore leur teneur en matière organique au moment de leur sédimentation. La construction de ce modèle se base sur des données acquises au cours de campagnes sismiques, de mesures dans des puits, de carottages, etc.

- une étape de reconstruction structurale de cette représentation maillée, représentant des états antérieurs de l'architecture du bassin. Cette étape peut être réalisée à l'aide d'une méthode dite de "backstripping" (Steckler et al., 1978) ou encore par une méthode dite de restauration structurale (EP 2110686).

- une étape de simulation numérique d'une sélection de phénomènes physiques se déroulant au cours de l'évolution du bassin et contribuant à la formation des pièges pétroliers. Cette étape, connue sous le terme de simulation de bassin, s'appuie sur une représentation discrétisée de l'espace et du temps. En particulier, une simulation de bassin fournit une cartographie prédictive du sous-sol, indiquant l'emplacement probable des gisements, ainsi que la teneur, la nature et la pression des hydrocarbures qui y sont piégés.

En fournissant des informations quantitatives et fiables, cette démarche intégrée de modélisation de bassin permet d'augmenter le taux de succès lors d'un forage d'un puits d'exploration.

**État de la technique**

Les documents suivants seront cités au cours de la description :

Carruthers, Transport of secondary oil migration using gradient-driven invasion percolation techniques. PhD thesis, Heriot-Watt University, Edinburgh, Scotland, UK, 1998.

De Marsily G., Quantitative hydrogeology, Academic Press, 1986.

Duan et Mao, A thermodynamic model for calculating methane solubility, density and gas phase composition of methane-bearing aqueous fluids from 273 to 523 K and from 1 to 2000 bar, Geochimica et Cosmochimica Acta 70 (2006) 3369-3386.
Langmuir I., The constitution and fundamental properties of solids and liquids. part i. solids.; J. Am. Chem. Soc. 38, 2221-95 1916.
R. Eymard, T. Gallouet, R. Herbin, The finite volume method, Handbook for Numerical Analysis, Ph. Ciarlet J.L. Lions eds, North Holland, 2000.
I.Moretti, F.Lepage et M.Guiton, "KINE3D: a new 3D restauration method based on a mixed approach linking geometry and geomechanics", Oil & Gas Science and Technology - Rev.IFP, Vol.61 (2006), n°2, pp277-289.
R. Scheichl, R. Masson, J. Wendebourg, Decoupling and Block Preconditioning for Sedimentary Basin Simulations, Computational Geosciences 7(4), pp. 295-318, 2003.
Schneider et Wolf, Quantitative HC potential évaluation using 3D basin modelling : application to Franklin structure, central Graben, North Sea, UK ». Marine and Petroleum Geology 17 (2000) 841-856.
Schneider F., Modelling multi-phase flow of petroleum at the sedimentary basin scale. Journal of Geochemical exploration 78-79 (2003) 693-696).
F. Schneider, S. Wolf, I. Faille, D. Pot, A 3D Basin Model for Hydrocarbon Potential Evaluation : Application to Congo Offshore , Oil & Gas Science and Technology - Rev. IFP, Vol. 55 (2000), No. 1, pp. 3-13.
Steckler, M.S., and A.B. Watts, Subsidence of the Atlantic-type continental margin off New York, Earth Planet. Sci. Lett., 41, 1-13, 1978.
Sylta, Modeling of secondary migration and entrapment of a multicomponent hydrocarbon mixture using équation of state and ray-tracing modeling techniques, Petroleum migration, Geological Society, Special publication n°59, pp.111-112, 1991.
Parmi les phénomènes physiques pris en compte au cours de l'étape de simulation de bassin décrite ci-dessus, on simule entre autres :

- la formation des hydrocarbures, à partir notamment de la matière organique initialement enfouie avec les sédiments ;

- et le transport de ces hydrocarbures, connu sous le terme de « migration », depuis les roches dans lesquelles ils se sont formés jusqu'à celles où ils sont piégés.

Les procédés de simulation de bassin selon l'art antérieur permettent de simuler trois processus possibles de formation d'hydrocarbures :

- par transformation chimique de la matière organique sous l'effet des fortes températures qui règnent dans le sous-sol profond (WO 2014/040622 A1) ; il s'agit de la production d'hydrocarbures thermogénique ;
- par action directe de certains micro-organismes présents en profondeur dans les sédiments, qui dégradent la matière organique initiale en produisant notamment du méthane ; il s'agit de la production biogénique primaire (WO 2014/040622 A1) ;
- par action de certains micro-organismes du sous-sol profond, qui dégradent certains hydrocarbures en produisant notamment du méthane : il s'agit de la production biogénique secondaire (WO 2003/031644 A3).

Les procédés de simulation de bassin selon l'art antérieur permettent de simuler la migration des hydrocarbures produits, tels que le gaz biogénique primaire et secondaire, en faisant l'hypothèse que ceux-ci se déplacent sous la forme d'une ou plusieurs phases, séparées de la phase aqueuse, que l'on nomme généralement « gaz libre ». Plusieurs méthodes sont disponibles pour modéliser la migration du gaz libre : la méthode par lancer de rayons (Sylta, 1991), la méthode par invasion-percolation (Carruthers, 1998), et la résolution des équations de Darcy généralisées (Schneider, 2003).
On connaît également le document US 2015/066461 qui concerne la prédiction au cours des temps géologiques de la distribution d'hydrocarbures piégés dans des clathrates, dans une zone de stabilité des clathrates, les clathrates pouvant piéger des gaz biogéniques.

On connaît également le document :

Eduardo Martinez, « Shale Gas Evaluation-Exploration », 27 novembre 2012, Extrait de l'internet : http://www.geosoc.fr/bibliothegue-sgf/reglement-interieur/cat view/1-dossiers/17-eneraie/41-conference-les-aaz-de-schiste-ou-de-roche-mere.html, qui décrit une méthodologie dédiée à l'évaluation de la présence de gaz de schiste dans un bassin sédimentaire, les gaz de schistes pouvant résulter d'une production de gaz biogénique.

On connaît également le document: Fréderic Schneider et. al., "PREDICTION OF LOW-MATURITY / BIOGENIC GAS ACCUMULATIONS: APPLICATION TO THE OFFSHORE LEBANON", 1 janvier 2013, extrait de l'Internet:URL:https:// www.researchgate.net/publication/308648439_PREDICTION OF LOW-MATURITY_BIOGENIC_GAS_ACCUMULATIONS_APPLICATION_TO_THE_OFFSHORE_LEBANON, qui concerne le domaine technique de la prédiction d'accumulations de gaz biogénique/peu mature accumulations.

On connaît également le document US 2010/081184 A1 qui concerne le domaine de la simulation de la production de gaz biogénique dans une formation souterraine et du déplacement de ce gaz.

Toutefois, la simulation de l'étape de migration des hydrocarbures selon l'art antérieur ne tient pas compte d'un vecteur possible de transport du gaz biogénique, qu'il soit d'origine primaire ou secondaire : le transport par advection d'une partie du gaz biogénique qui peut être dissous dans l'eau présente dans le bassin.

En effet, les bassins sédimentaires sont constitués de roches poreuses dont la porosité est initialement remplie par de l'eau : de l'eau de mer si les sédiments sont accumulés en milieu marin, et de l'eau de pluie si les sédiments se sont accumulés en milieu continental. On parle alors d' « eau porale », ou encore d' « eau de formation ». Par ailleurs, au cours de l'évolution du bassin, cette eau peut circuler dans le réseau poreux sous l'effet d'un champ de pression. Ce dernier est contrôlé par exemple par le dépôt de nouveaux sédiments qui tendent à surcharger le squelette rocheux et à expulser l'eau de la roche, ou par l'émersion d'un relief qui va imposer une charge hydraulique et créer un écoulement souterrain des zones les plus hautes vers un exutoire situé plus bas.

En fonction de différents paramètres (conditions de pression et de température, salinité de l'eau, etc), du gaz biogénique peut être potentiellement dissous dans cette eau porale, et cette eau étant en circulation au sein du bassin, le gaz biogénique peut être potentiellement transporté par cette eau. Par exemple dans le cas du méthane, sa solubilité dans l'eau est suffisante pour que le transport par advection par l'eau puisse déplacer des quantités de méthane économiquement intéressantes vers des gisements pétroliers. En effet, on peut dissoudre approximativement $1m^3$ de méthane (ramené aux conditions ambiantes) dans $1m^3$ d'eau, à 1000m de profondeur. Ainsi, dans une couche sédimentaire de $1km^2$ et de 10m d'épaisseur située à 1000m de profondeur et présentant une porosité de 25%, peuvent être dissoutes jusqu'à 2,5 millions de $m^3$ de méthane (ramenés aux conditions ambiantes). Il apparaît donc que d'importantes quantités de gaz biogénique puissent être dissoutes dans l'eau porale, et donc transportées au cours des temps géologiques par cette eau, au sein d'un bassin.

Puis, en fonction des conditions de pression et de température rencontrées au cours des temps géologiques, ce gaz biogénique, dissous puis transporté par advection, peut alors en partie être libéré sous forme de gaz libre, ce gaz libre pouvant lui-même faire l'objet d'une migration selon l'art antérieur, et ainsi potentiellement donner lieu à des accumulations d'ordre économique dans certaines zones d'un bassin. Ainsi, la non prise en compte dans une simulation de bassin du transport de gaz biogénique sous une forme dissoute via l'eau de formation d'un bassin peut conduire à d'importantes erreurs concernant la prédiction de l'emplacement des accumulations d'hydrocarbures au sein d'un bassin. Il apparaît donc essentiel de pouvoir modéliser cette forme de migration du gaz biogénique, afin de rendre les simulations de bassin plus précises.

La présente invention concerne une méthode de simulation de la migration des hydrocarbures incluant une étape de modélisation de la production de gaz biogénique, ainsi qu'une étape permettant la simulation de la migration, par advection, d'au moins une partie de ce gaz dissous dans l'eau présente dans le bassin, et la prédiction de la quantité de gaz libre résultante.

**Le procédé selon l'invention**

Ainsi, la présente invention concerne un procédé d'exploitation d'un bassin sédimentaire comportant des hydrocarbures selon la revendication 1.

Avantageusement, on peut déterminer une quantité de gaz biogénique d'origine primaire et/ou d'origine secondaire.

Selon un mode de réalisation de l'invention, on peut déterminer, pour chacun desdits pas de temps et dans chacune desdites mailles de ladite représentation maillée obtenue pour ledit pas de temps, ladite quantité dudit gaz biogénique libre par différence entre ladite quantité totale de gaz biogénique présente dans ladite maille audit pas de temps et ladite quantité de gaz biogénique dissous dans l'eau de ladite maille audit pas de temps.

Selon un mode de réalisation de l'invention, on peut déterminer en outre une quantité de gaz biogénique adsorbable dans ladite maille audit pas de temps, et on détermine ladite quantité de gaz biogénique dissous dans ladite maille et pour ledit pas de temps en considérant que ledit gaz biogénique est préférentiellement adsorbé, puis dissous.

En outre, l'invention concerne un produit programme d'ordinateur téléchargeable depuis un réseau de communication et/ou enregistré sur un support lisible par ordinateur et/ou exécutable par un processeur selon la revendication 5.

D'autres caractéristiques et avantages du procédé selon l'invention, apparaîtront à la lecture de la description ci-après d'exemples non limitatifs de réalisations, en se référant aux figures annexées et décrites ci-après.

**Présentation succincte des figures**

- La Figure 1 montre une représentation schématique du sous-sol d'un bassin pétrolier.

- La Figure 2 montre un exemple de bassin sédimentaire (à gauche) et un exemple de représentation maillée (à droite) de ce bassin.

- La Figure 3 représente la reconstruction structurale, représenté par 3 états de déformations à 3 dates différentes, d'un bassin sédimentaire..

- La Figure 4A représente un exemple de bassin sédimentaire composé de 30 couches et de 122880 mailles.

- La Figure 4B présente la masse cumulée de méthane produite dans chaque maille d'une section verticale du bassin présenté en Figure 4A, depuis la naissance du bassin à l'âge actuel, calculée par le procédé selon l'invention et exprimée en $kg/m^2$ de couche.

- La Figure 4C présente la masse cumulée de gaz dissous dans chaque maille de la section verticale présentée en Figure 4B, depuis la naissance du bassin à l'âge actuel, calculée par le procédé selon l'invention et exprimée en $kg/m^2$ de couche.

- La Figure 4D présente la masse cumulée de méthane libérée sous forme de gaz libre dans chaque maille de la section verticale présentée en Figure 4B, depuis la naissance du bassin jusqu'à l'âge actuel, calculée par le procédé selon l'invention et exprimée en $kg/m^2$ de couche.

**Description détaillée du procédé**

Les définitions suivantes sont utilisées au cours de la description de l'invention :

- simulation de bassin : il s'agit d'une sous-étape de la modélisation de bassin, la modélisation de bassin étant plus générale et comprenant également une sous-étape de construction d'une représentation maillée, et une sous-étape de reconstruction structurale. La simulation de bassin permet de reconstituer l'histoire géologique et géochimique d'un bassin, depuis un temps géologique t jusqu'au temps actuel. Classiquement en simulation de bassin, la période sur laquelle est reconstituée l'histoire d'un bassin est discrétisée en « pas de temps ».

- simulateur de bassin : il s'agit d'un logiciel permettant d'effectuer une simulation de bassin de façon numérique, à l'aide d'un ordinateur.

- événement de migration : il s'agit d'un regroupement de plusieurs pas de temps d'une simulation de bassin. Un événement peut correspondre à un dépôt sédimentaire particulier, chaque surface délimitant ce dépôt pouvant correspondre par exemple à une surface d'érosion ou à un dépôt sédimentaire de nature différente.

- gaz biogénique : il s'agit du gaz produit par l'action de micro-organismes, sur la matière organique (gaz biogénique primaire) ou sur les hydrocarbures déjà formés (gaz biogénique secondaire).

- advection : de manière générale, l'advection est le transport d'une quantité (scalaire ou vectorielle), par un champ vectoriel. Dans le cas présent, il s'agit du transport de gaz biogénique, après dissolution, par la vitesse d'écoulement de l'eau porale.

L'invention concerne un procédé d'exploitation d'un bassin sédimentaire, notamment l'identification des zones dudit bassin dans lesquelles des hydrocarbures ont pu s'accumuler puis l'extraction de ces hydrocarbures.

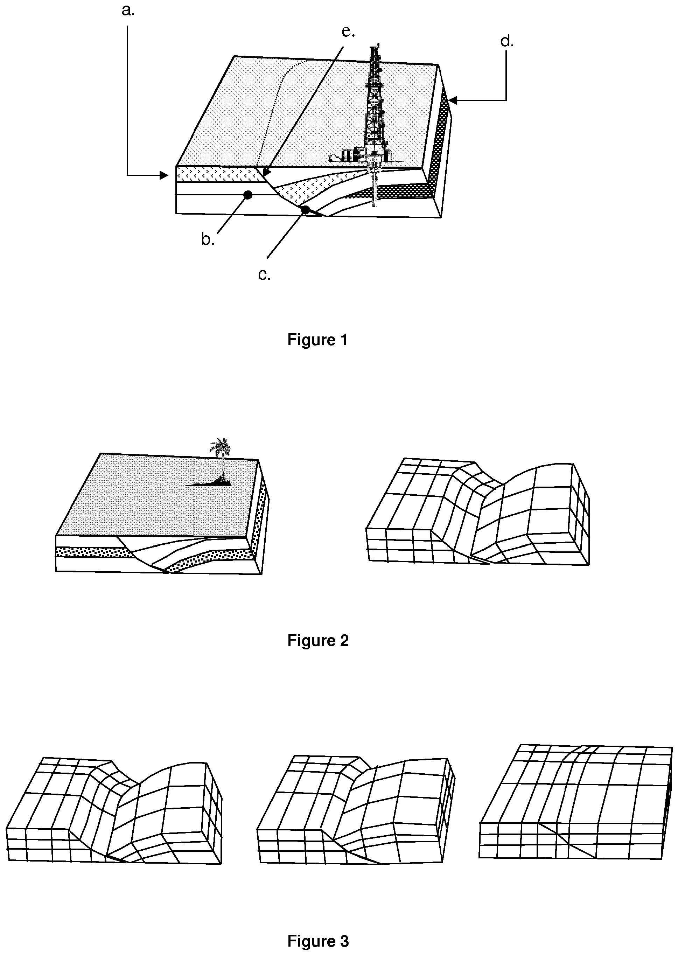

La Figure 1 montre une représentation schématique d'un bassin sédimentaire, comportant plusieurs couches géologiques (un exemple de couches géologiques est montré en a), délimitées par des interfaces sédimentaires (un exemple d'interfaces sédimentaires est montré en b) traversées par une faille ou rupture (e), et une accumulation d'hydrocarbures (d) dans une des couches géologiques du bassin considéré (c).

L'architecture actuelle d'un bassin résulte notamment d'une déformation du sous-sol au cours des temps géologiques, comportant a minima une compaction des couches par l'effet de la surcharge appliquée par les couches supérieures qui se sont progressivement déposées, et pouvant également impliquer des ruptures, le long de plans de failles, résultant de forces tectoniques. La nature des hydrocarbures présents dans un bassin sédimentaire résulte notamment des conditions de pression et de température auxquelles est soumis le bassin (plus précisément auxquelles est soumis la matière organique et les composés hydrocarbonés déjà formés) au cours des temps géologiques. Selon l'art antérieur, au moins une partie des hydrocarbures ainsi formés vont ensuite migrer au sein dudit bassin, par exemple par capillarité, flottabilité ou par différence de gradient de pression entre les différentes zones du bassin.

Un des objets de la présente invention est de mieux prédire les accumulations de gaz d'origine biologique, dit gaz biogénique, dans le sous-sol, à des fins d'exploration et d'exploitation des ressources fossiles. En particulier, la présente invention vise à prendre en compte, au cours d'une simulation de bassin, depuis un temps géologique t jusqu'à l'actuel et à chaque pas de temps de la simulation, la formation du gaz biogénique, le transport (phénomène d'advection) d'au moins une partie de ce gaz, après dissolution dans l'eau présente dans le bassin, et d'en déduire la quantité de gaz biogénique libre (en particulier non dissoute) résultante.

La présente invention requiert de disposer :

- de mesures de propriétés relatives au bassin : il s'agit de mesures réalisées in situ (par exemple par carottage, via des diagraphies réalisées dans des puits, par des campagnes d'acquisition sismique etc), en différents points du bassin étudié, nécessaires à une simulation de bassin, telles que la porosité, la perméabilité, ou encore la lithologie au temps actuel ;

- d'un simulateur de bassin selon l'art antérieur, permettant de reconstituer les processus géologiques et géochimiques ayant affecté le bassin depuis un temps géologique t jusqu'au temps actuel. Selon l'invention, la période sur laquelle on reconstitue l'histoire de ce bassin est discrétisée en pas de temps. Selon l'invention, on dispose en entrée du simulateur de bassin d'une représentation maillée du bassin pour chaque pas de temps de la simulation. A chaque pas de temps et dans chaque maille de la représentation maillée du bassin au pas de temps considéré, le simulateur de bassin requis pour la mise en oeuvre de l'invention permet au moins de calculer les quantités physiques suivantes : la température, la pression, la porosité et la masse volumique de la roche contenue dans la maille considérée, les vitesses d'eau, et le TOC (ou concentration de la roche en matière organique). Selon un mode de réalisation de la présente invention, le simulateur de bassin utilisé permet, en outre, de calculer la quantité d'hydrocarbures d'origine thermogénique. Le calcul des vitesses d'eau est donné par exemple dans le document de (Marsily, 1986), et le calcul des autres quantités physiques citées ci-dessus est par exemple décrit dans le document (Schneider et al., 2000). Ainsi, la simulation de bassin consiste en la résolution d'un système d'équations différentielles décrivant l'évolution au cours du temps des grandeurs physiques étudiées. Pour ce faire, on peut par exemple utiliser une discrétisation par la méthode des volumes finis, comme décrit par exemple dans (Scheichl et al., 2003). Conformément au principe des méthodes de volumes finis centrés sur les mailles, les inconnues sont discrétisées par une valeur constante par maille et les équations de conservation (masse ou chaleur) sont intégrées en espace sur chaque maille et en temps entre deux pas de temps successifs. Les équations discrètes expriment alors que la quantité conservée dans une maille à un pas de temps donné est égale à la quantité contenue dans la maille au pas de temps précédent, augmentée des flux de quantités entrés dans la maille et réduite des flux de quantités sorties de la maille par ses faces, plus les apports extérieurs. Un exemple d'un tel simulateur de bassin est le logiciel TemisFlow™ (IFP Énergies nouvelles, France).

La présente invention comporte au moins les étapes suivantes :

1. Construction d'une représentation maillée du bassin au temps actuel

2. Reconstruction structurale

3. Simulation de bassin
Au cours de cette étape, pour chaque pas de temps de la simulation et pour chaque maille de la représentation maillée, on réalise au moins les étapes suivantes :

**EP 3 075 947 B1**

3.1. Estimation de la quantité d'hydrocarbures

Au cours de cette étape, on estime, entre autres, la quantité de gaz biogénique produit dans chaque maille de ladite représentation maillée.

3.2. Simulation de la migration des hydrocarbures

Au cours de cette étape, on réalise, entre autres, les étapes suivantes :

3.2.1. Estimation de la quantité de gaz biogénique dissous
Au cours de cette étape, on calcule la quantité de gaz biogénique dissous dans l'eau.

3.2.2. Simulation du transport par advection du gaz biogénique dissous
Au cours de cette étape, on simule le transport par advection du gaz biogénique dissous dans l'eau.

4. Exploitation du bassin sédimentaire

Les principales étapes de la présente invention sont détaillées ci-après.

1. Construction d'une représentation maillée du bassin sédimentaire au temps actuel

Il s'agit au cours de cette étape de construire une représentation maillée du bassin étudié au temps actuel. Cette maquette du bassin est généralement représentée sur ordinateur, sous la forme d'un maillage ou grille, chaque maille étant caractérisée par une ou plusieurs propriétés relatives au bassin (telles que le faciès, la porosité, la perméabilité, la saturation, ou encore la teneur en matière organique au moment de la sédimentation). La construction de ce modèle se base sur des données acquises au cours de campagnes sismiques, de mesures dans des puits, de carottages, etc.
Plus précisément, la construction d'une représentation maillée d'un bassin consiste à discrétiser en trois dimensions l'architecture du bassin, à attribuer des propriétés à chacune des mailles de cette représentation maillée, et à ajouter des conditions aux limites de cette représentation pour rendre compte de l'interaction de la zone modélisée avec son environnement. Pour ce faire, on exploite notamment les mesures de propriétés réalisées en différents points du bassin décrites ci-dessus, que l'on extrapole et/ou interpole, en les différentes mailles de la représentation maillée, suivant des hypothèses plus ou moins restrictives.
Le plus souvent la discrétisation spatiale d'un bassin sédimentaire est organisée en couches de mailles, représentant chacune les différentes couches géologiques du bassin étudié. La Figure 2 illustre à gauche un exemple de bassin sédimentaire, et à droite un exemple de représentation maillée de ce bassin.

2. Reconstruction structurale

Au cours de cette étape, il s'agit de reconstituer les architectures passées du bassin, depuis le temps actuel jusqu'à un temps géologique t, antérieur à l'actuel. Pour ce faire, on déforme la représentation maillée construite à l'étape précédente afin de représenter l'évolution anti-chronologique de l'architecture du sous-sol au cours des temps géologiques, et ce pour chaque pas de temps de la simulation. On obtient ainsi une représentation maillée pour chaque pas de temps de la simulation, depuis le temps actuel jusqu'au temps géologique t.
Selon un mode de réalisation de la présente invention, la reconstruction structurale peut être particulièrement simple si elle se base sur l'hypothèse que sa déformation résulte uniquement d'une combinaison de mouvements verticaux par compaction du sédiment ou par surrection ou affaissement de son socle. Cette technique, connue sous le terme de "backstripping" (ou «décompaction progressive du bassin » en français) est décrite par exemple dans (Steckler et Watts, 1978).
Selon un autre mode de réalisation de la présente invention, dans le cas de bassins dont l'histoire tectonique est complexe, notamment dans le cas de bassins présentant des failles, il convient d'utiliser des techniques aux hypothèses moins restrictives, telles que la restauration structurale. Une telle restauration structurale est décrite par exemple dans le document FR 2 930 350 A (US 2009/0265152 A). La restauration structurale consiste à calculer les déformations successives que le bassin a subies, en intégrant les déformations dues à la compaction et celles qui résultent des forces tectoniques. Dans l'exemple de la Figure 3, trois états sont utilisés pour représenter la déformation du sous-sol au cours des temps géologiques. La représentation maillée de gauche représente l'état actuel, où l'on peut observer une interface de glissement (ici une faille). La représentation maillée de droite représente le même bassin sédimentaire à un temps géologique *t*, antérieur à l'actuel. A ce temps *t*, les couches sédimentaires n'étaient pas encore fracturées. La repré-

8

sentation maillée centrale est un état intermédiaire, c'est-à-dire qu'elle représente le bassin sédimentaire à un temps *t'*, compris entre le temps *t* et l'actuel. On constate que le glissement a commencé à modifier l'architecture du bassin.

### 3. Simulation de bassin

Au cours de cette étape, on réalise une simulation de bassin permettant de tenir compte, entre autres, de la formation de gaz biogénique au cours du temps et du transport au sein du bassin d'au moins une partie de ce gaz biogénique, sous une forme dissoute, par advection. Selon l'invention, on en déduit alors une quantité de gaz libre, c'est-à-dire de gaz non dissous.

Selon l'invention, on utilise pour ce faire un simulateur selon l'art antérieur, permettant de calculer au moins les quantités suivantes pour chaque pas de temps et dans chacune des mailles de la représentation maillée du pas de temps considéré : la température, la pression, la porosité et la masse volumique de la roche contenue dans la maille considérée, les vitesses d'eau, et le TOC (ou concentration de la matière organique). Selon un mode de réalisation de la présente invention, le simulateur de bassin utilisé permet, en outre, de calculer la quantité d'hydrocarbures d'origine thermogénique. Le calcul de ces quantités est par exemple décrit dans (Schneider et al., 2000).

Ainsi, le simulateur de bassin utilisé pour la mise en oeuvre de la présente invention permet de discrétiser et résoudre les équations (voir par exemple Schneider et al., 2000) modélisant les processus simulées par la simulation de bassin dans les représentations maillées issues de l'étape de reconstruction structurale décrite précédemment, auquel on applique une dynamique "à rebours". Ainsi, le maillage au début d'une étape de simulation de bassin correspond au maillage obtenu à l'issue de l'étape de reconstruction structurale décrite précédemment ; puis ce maillage évolue vers son état actuel, qui correspond aussi au maillage initial de l'étape de reconstruction structurale décrite précédemment.

Selon l'invention, on réalise au moins les étapes 3.1 et 3.2 pour chaque pas de temps n d'une simulation de bassin et pour chaque maille de la représentation maillée représentative du bassin au pas de temps considéré :

### 3.1. Estimation de la quantité d'hydrocarbures

Au cours de cette étape, il s'agit d'estimer la quantité d'hydrocarbures présents dans la maille considérée au pas de temps *n* considéré.

Selon l'invention, on estime la quantité d'hydrocarbures présents dans la maille considérée au pas de temps *n* en calculant une quantité d'hydrocarbures produite audit pas de temps *n*, à laquelle on ajoute la quantité d'hydrocarbures présente à la fin du pas de temps précédent *n-1* dans cette même maille.

Selon l'invention, le calcul de la quantité d'hydrocarbures produite au pas de temps *n* dans la maille considérée comprend au moins le calcul de la quantité de gaz biogénique totale $M_{bio,n}$ produite dans la maille considérée pour ledit pas de temps *n*.

Selon un mode de réalisation de la présente invention, une partie du gaz biogénique produit dans la maille considérée au pas de temps *n* est un gaz biogénique d'origine primaire, produit par biodégradation de la matière organique présente dans la maille considérée. Selon un mode de mise en oeuvre de l'invention, on calcule la masse $M_{bio1,n}$ de gaz biogénique primaire produit au cours d'un pas de temps *n* dans un maille contenant de la matière organique selon une formule du type :

$$M_{bio1,n} = r.\left(a_0 + A(t)\right)^b .e^{-\frac{(T-T_0)^2}{\lambda}} \frac{K_M}{K_M + c}.TOC.\frac{s.m_{gaz}}{m_C}.\rho_{roche} \quad (1)$$

où :

- $K_M$ : une constante, appelée constante de Monod ; par défaut, $K_M$=30 mM (moles/m³),
- $r$ : paramètre d'ajustement, exprimé en Ma⁻¹ ; par défaut, $r$=0,16 Ma⁻¹,
- $b$ : deuxième paramètre d'ajustement ; par défaut, b=-0,95 ,
- $a_0$ : une constante caractérisant le temps d'exposition du sédiment à certaines transformations chimiques en début d'enfouissement, en années ; par défaut, $a_0$=30000 a,
- $\rho_{roche}$ : masse volumique de la roche,
- $A(t)$ : l'âge de dépôt de la maille, en années,
- $T_0$ : la température à laquelle l'activité bactérienne est maximale ; par défaut, $T0 = 303K,$
- $T$ : la température (en K), dans la maille considérée au pas de temps considéré,
- $\lambda$ : troisième paramètre d'ajustement ; par défaut, $\lambda$=-369,33 K²,

- $s$ : paramètre de la stoechiométrie ; *1* mole de C se convertit en $s$ moles de gaz ; par défaut, *s=0.5*,
- $m_{gaz}$ : la masse molaire de gaz,
- $m_C$ : la masse molaire du carbone,
- $TOC$ : la concentration initiale de la matière organique,

les valeurs (autres que les valeurs par défaut données ci-dessus) des paramètres $r$, $b$, $\lambda$, $a_0$ pouvant être prédéfinies par le spécialiste, à partir de ses connaissances générales.

Selon un mode de réalisation de la présente invention, une partie du gaz biogénique produit dans une maille est un gaz biogénique d'origine secondaire, produit par la biodégradation des hydrocarbures dans la maille considérée. Selon un mode préféré de mise en oeuvre de l'invention, on calcule la masse $M_{bio2,n}$ de gaz biogénique secondaire produit au cours d'un pas de temps $n$ dans une maille imprégnée d'hydrocarbures selon une formule du type :

$$M_{bio2,n} = N_{bact}(z).C_{bact}.E\frac{m_{gaz}}{m_C} \qquad (2)$$

où :

- $C_{bact}$ : consommation d'une bactérie en masse de carbone au cours du pas de temps,

- $E$ : pourcentage du volume de roche affecté par la biodégradation ,

- $N_{bact}$ : nombre de bactéries par volume de roche, est exprimé en fonction de la profondeur z,

- $m_{gaz}$ : la masse molaire du gaz produit,

- $m_C$ : la masse molaire du carbone,

les valeurs des paramètres $C_{bact}$, $E$, $N_{bact}$ pouvant être prédéfinies par le spécialiste, à partir de ses connaissances générales.

Selon un mode de réalisation de la présente invention, la quantité de gaz biogénique totale $M_{bio,n}$ présente dans la maille considérée au pas de temps $n$ est obtenue en ajoutant les quantités de gaz biogénique primaire $M_{bio1,n}$ et secondaire $M_{bio2,n}$ produites au pas de temps $n$, à la masse totale de gaz biogénique $M_{bio,n-1}$ contenue dans la maille au pas de temps précédent $n-1$, soit :

$$M_{bio,n} = M_{bio,n-1} + M_{bio1,n} + M_{bio2,n} \qquad (3)$$

Selon un mode de réalisation de la présente invention, on calcule en outre une quantité d'hydrocarbures formés par thermogénèse (voir par exemple Schneider et al, 2000) dans maille considérée et au pas de temps considéré, et on prend en compte cette quantité d'hydrocarbures formés par thermogénèse dans le calcul de la quantité d'hydrocarbures totale présents dans la maille considéré au pas de temps considéré.

3.2. Calcul de la migration des hydrocarbures

Au cours de cette étape, il s'agit de déterminer dans quelle(s) maille(s) vont migrer les hydrocarbures présents dans une maille donnée à un pas de temps $n$. Un bilan est ensuite effectué afin de connaître les concentrations en gaz.

Selon l'invention, au moins une partie du gaz biogénique présent dans une maille à un pas de temps $n$ est dissoute dans l'eau présente dans cette même maille et est transportée par cette eau (phénomène d'advection).

3.2.1. Calcul de la quantité de gaz biogénique dissous

Au cours de cette sous-étape, on calcule la quantité $M_{d,n}$ de gaz biogénique dissous dans l'eau contenue dans la maille considérée au pas de temps $n$ considéré.

Selon un mode de réalisation de la présente invention, on détermine dans un premier temps une masse maximale de gaz biogénique solubilisable $Msol_{max}$ dans la maille considérée au pas de temps $n$ considéré.

Selon un mode de réalisation de la présente invention, on utilise un modèle de solubilité du gaz biogénique dans l'eau pour le calcul de la masse maximale de gaz biogénique solubilisable dans la maille considérée au pas de temps *n* considéré. La solubilité dépend au premier ordre de la pression, de la température, et de la composition de l'eau en éléments dissous.

Selon un mode de mise en oeuvre de la présente invention dans lequel le gaz biogénique est du méthane, et dans lequel le gaz biogénique est dissous dans de l'eau pure, la solubilité $c_{max}$ peut être exprimée selon une formule empirique du type suivant, inspirée de (Duan et Mao, 2006) :

$$c_{max} = e^{(\ln(P) - G(P,T))} \qquad (4)$$

$$G(P,T) = c_1 + c_2 T + \frac{c_3}{T} + c_4 T^2 + \frac{c_5}{T^2} + c_6 P + c_7 PT + \frac{c_8 P}{T} + \frac{c_9 P}{T^2} + c_{10} P^2 T$$

où : avec :

- $C_1 = 8,3144$ ;
- $C_2 = -0,7277.10^{-3}$ ;
- $C_3 = 0,2149.10^4$ ;
- $C_4 = -0,1402.10^4$ ;
- $C_5 = -0,6674.10^6$ ;
- $C_6 = 0,7699.10^{-2}$ ;
- $C_7 = -0,5025.10^{-5}$ ;
- $C_8 = -3,009$ ;
- $C_9 = -0,4847.10^3$ ;
- $C_{10} = 0$ ;
- $P$ : pression en bars dans la maille considérée au pas de temps considéré ;
- $T$ : température en K dans la maille considérée, au pas de temps considéré.

Selon un autre mode de mise en oeuvre de l'invention, dans lequel le gaz biogénique est du méthane, et dans lequel le gaz biogénique est dissous dans de l'eau saline, on détermine la solubilité $c_{max}$ du méthane à partir d'un modèle de solubilité tenant compte de la salinité de l'eau, comme par exemple décrit dans le document (Duan et Mao, 2006).

Selon un mode de réalisation de la présente invention, on calcule la quantité maximale de gaz solubilisable $Msol_{max}$ dans une maille à un pas de temps *n* selon une formule du type :

$$Msol_{max} = Volume_{maille} \cdot \varphi \cdot c_{max} \qquad (5)$$

où $\varphi$ est la porosité de la roche dans la maille considérée, $Volume_{maille}$ est le volume de la maille considérée.

Selon un mode de mise en oeuvre dans lequel on considère que le gaz biogénique présent dans une maille peut uniquement faire l'objet d'une dissolution dans l'eau présente dans ladite maille, la quantité de gaz dissous $M_{d,n}$ dans l'eau au pas de temps *n* peut alors être obtenue de la façon suivante :

$$M_{d,n} = Min(Msol_{max}, M_{bio,n}) \qquad (6)$$

Et selon ce même mode de mise en oeuvre de l'invention, la quantité de gaz libre $M_{L,n}$ présent dans la maille considérée au pas de temps *n* considéré peut alors être obtenue de la façon suivante :

$$M_{L,n} = M_{bio,n} - M_{d,n} \qquad (7)$$

Selon un autre mode de mise en oeuvre de la présente invention, une partie du gaz biogénique présent dans la maille considérée au pas de temps *n* est retenue dans la maille par un mécanisme d'adsorption. Selon un mode de réalisation de la présente invention, on considère que l'adsorption s'effectue sur la matière organique présente dans la maille et suivant le modèle de Langmuir (Langmuir, 1916). Dans ce cas, la masse maximum de gaz adsorbable $Mads_{max,n}$ s'exprime en g par volume de roche et peut être obtenue par une formule du type :

$$Mads_{max} = TOC_{tot} \cdot y_{max} \cdot \frac{\beta e^{\alpha/T} \cdot P}{1 + \beta e^{\alpha/T} \cdot P} \cdot \rho_{roche} \qquad (8)$$

avec :

- $TOC_{tot}$ : la quantité de carbone organique sur laquelle s'effectue l'adsorption, en g/kg de roche,
- $\rho_{roche}$ : la masse volumique de la roche en kg/m$^3$,
- $y_{max}$ : la capacité d'adsorption maximum, en g de gaz par g de carbone organique Par défaut, $y_{max}=0,01g/g_{OC}$,
- $\alpha$ et $\beta$ : les 2 paramètres du modèle d'adsorption de Langmuir. Par défaut, $\alpha$=2100K et $\beta$=1MPa$^{-1}$.

Selon ce même mode de réalisation, la quantité $M_{ads,n}$ de gaz potentiellement adsorbable dans la maille considérée au pas de temps *n* peut alors être obtenue de la façon suivante :

$$M_{ads,n} = Min\left(M_{bio,n} , \ Mads_{max}\right) \qquad (9)$$

Selon un mode de mise en oeuvre de la présente invention, on calcule la quantité de gaz biogénique dissous dans l'eau porale en considérant que le gaz biogénique va de préférence saturer les sites d'adsorption, le restant pouvant alors saturer l'eau porale jusqu'à atteindre la solubilité maximum. La quantité $M_{d,n}$ de gaz biogénique disponible après adsorption pour une éventuelle solubilisation dans la maille considérée et au pas de temps *n* considéré peut alors être obtenue de la façon suivante :

$$M_{d,n} = \ Min(Msol_{max}, (M_{bio,n} - M_{ads,n}) \qquad (10)$$

Selon un mode de mise en oeuvre de la présente invention, si après adsorption, puis dissolution du gaz dans l'eau, il reste un excédent de gaz biogénique, on suppose que celui-ci constitue une phase vapeur, dit gaz libre, séparée de la phase aqueuse. On définit alors la quantité de gaz libre $M_{L,n}$ d'origine biogénique dans la maille considérée et au pas de temps *n* considéré de la façon suivante :

$$M_{L,n} = M_{bio,n} - M_{ads,n} - M_{d,n} \qquad (11)$$

Ainsi, en fonction de la solubilité du gaz, et donc au premier ordre des conditions de pression et de température, le gaz biogénique présent dans une maille va être plus ou moins présent sous sa forme libre, ce qui peut donner lieu à des accumulations de gaz d'intérêt économique plus ou moins importantes.

3.2.2. Calcul du transport par advection du gaz biogénique dissous

Au cours de cette sous-étape, il s'agit de modéliser le transport par advection de la quantité $M_{d,n}$ de gaz dissous dans l'eau porale pour la maille considérée et pour le pas de temps *n* considéré.

Selon un mode de mise en oeuvre de la présente invention, on modélise le transport d'un gaz dissous dans l'eau, par le déplacement de l'eau, c'est-à-dire par advection, selon une équation de transport monophasique du type :

$$\frac{\partial}{\partial t}(\rho_w \varphi c) + div(\rho_w \varphi c \vec{V}_w) = 0 \qquad (11)$$

avec :

- $\varphi$, la porosité [su],
- $c$, la concentration en gaz dissous [g/L d'eau], avec c telle que $M_d = c/\varphi$ et $M_d$ est la masse de gaz dissous,
- $\rho_w$, la masse volumique de l'eau [g/L],
- $\vec{V}_w$, la vitesse d'eau [m/s],

les valeurs de ces paramètres étant par exemple calculées par une simulation numérique de bassin basée sur le document (Schneider et al., 2000). La vitesse d'eau est notamment obtenue par résolution des équations de Darcy qui gouvernent les écoulements en milieu poreux (de Marsily, 1986).

En utilisant la conservation de la masse d'eau, l'équation (11) ci-dessus se réécrit de la façon suivante :

$$\rho_w \varphi \frac{\partial}{\partial t}(c) + div(\rho_w \varphi c \vec{V}_w) - c\, div(\rho_w \varphi \vec{V}_w) = 0 \qquad (12)$$

Selon l'invention, l'équation (12) décrite ci-dessus est discrétisée en temps, selon les pas de temps de la simulation de bassin, et en espace, selon les mailles de la représentation maillée du bassin étudié. Selon un mode de réalisation de la présente invention, après un pas de temps $n$ de durée $\Delta t$, la concentration $c^n$ en fin de pas de temps $n$ dans la maille considérée est solution de l'équation discrète :

$$M_w{}^n\, c^n - \Delta t \sum_\delta (c_{\delta,\mathrm{amt}}^n - c^{n-1})\, Flux_{w\,\delta}{}^n = M_w{}^{n-1} c^{n-1} \qquad (13)$$

où :

- $c_{\delta,\mathrm{amt}}^n$ est la valeur de la concentration en gaz dissous dans la maille amont la maille courante, suivant le signe du flux d'eau $Flux_{w\,\delta}{}^n$, au pas de temps,
- $\varphi^n$, la porosité dans la maille considérée au pas de temps n,
- $\rho_w{}^n$, la masse volumique de l'eau dans la maille considérée au pas de temps I $_n$,
- $M_w{}^n = \rho_w{}^n\, \varphi^n\, Vol^n$, la masse d'eau dans la maille considérée au pas de temps $n$,
- $Flux_{w\,\delta}{}^n$, une approximation du flux d'eau massique de gaz dissous à travers l'arête $\delta$ de la maille considérée au pas de temps $n$,

les valeurs des paramètres ci-dessus étant estimées par exemple comme décrit dans le document (Schneider et al., 2000).

Puis, on peut calculer la masse $M_{advection,n}$ de gaz apportée par advection dans la maille considérée à la fin de du pas de temps $n$, au moyen de la relation suivante :

$$M_{advection,n} = \frac{c^n}{\varphi^n} \qquad (14)$$

Selon un mode de mise en oeuvre de l'invention, la quantité $M_{L,n}$ de gaz libre d'origine biogénique présente dans la maille considérée et calculée lors de l'étape 3.2.1 décrite précédemment peut faire l'objet d'une simulation de transport en phase séparée au pas de temps $n$ considéré, au moyen d'un simulateur de bassin selon l'art antérieur. Dans le cas d'un simulateur de bassin basé sur une modélisation de la migration par lancer de rayons (Sylta, 1991), la migration peut être calculée à la fin de chaque événement de migration, et pas nécessairement à chaque pas de temps de la simulation. Dans le cas d'un simulateur de bassin basé sur une modélisation de la migration selon le formalisme de la loi de Darcy (Schneider, 2003), la migration est calculée à la fin de chaque pas de temps de la simulation. A la fin de la simulation de la migration du gaz libre pour un pas de temps $n$ ou pour un événement de migration donné, la quantité de gaz libre $M_{L,n}$ est remise à jour par le simulateur de bassin selon l'art antérieur dans chacune des mailles de la représentation maillée associée audit pas de temps ou audit événement de migration.

Puis, selon l'invention, à la fin du pas de temps $n$ et avant de rentrer dans la boucle du pas de temps $n+1$, on met à jour dans chaque maille la quantité totale $M_{bio,n}$ de gaz d'origine biogénique dans la maille considérée de la façon suivante :

$$M_{bio,n} = M_{ads,n} + M_{L,n} + M_{advection,n} \qquad (15)$$

Ainsi, selon l'invention, à la fin d'un pas de temps $n$, la quantité totale $M_{bio,n}$ de gaz d'origine biogénique dans une maille donnée correspond à la somme de la quantité $M_{ads,n}$ de gaz biogénique adsorbé dans la maille au pas de temps $n$, la quantité $M_{L,n}$ de gaz biogénique libre dans la maille au pas de temps $n$, et la quantité $M_{advection,n}$ de gaz biogénique amené par advection dans la maille.

En outre, selon un mode de mise en oeuvre de l'invention, on prend également en compte le transport des hydrocarbures issus du craquage thermique de la matière organique (c'est-à-dire de la thermogénèse) au moyen d'un simulateur de bassin selon l'art antérieur. Ce transport peut être simulé par exemple via la méthode par lancer de rayons (Sylta, 1991), la méthode par invasion-percolation (Carruthers, 1998), ou encore la résolution des équations de Darcy généralisées (Schneider, 2003).

4. Exploitation du bassin sédimentaire

A l'issue des précédentes étapes, répétées pour chaque maille et pour chaque pas de temps de la simulation de bassin, on dispose au moins de la quantité de gaz libre d'origine biogénique présente dans chacune des mailles de la dite représentation maillée au temps actuel.

En outre, en fonction du simulateur de bassin utilisé pour mettre en oeuvre l'invention, on peut disposer par exemple d'informations sur :

i. la mise en place des couches sédimentaires,

ii. leur compaction sous l'effet du poids des sédiments sus-jacents,

iii. leur réchauffement au cours de leur enfouissement,

iv. les modifications de pressions de fluides résultant de cet enfouissement,

v. la formation des hydrocarbures formés par thermogénèse,

vi. le déplacement de ces hydrocarbures dans le bassin sous l'effet de la flottabilité, de la capillarité, des différences de gradients de pression les écoulements souterrains,

vii. la quantité d'hydrocarbures issus de la thermogénèse dans les mailles de ladite représentation maillée dudit bassin.

A partir de telles informations, le spécialiste a alors connaissance des zones dudit bassin, correspondant à des mailles de ladite représentation maillée au temps actuel dudit bassin, comportant des hydrocarbures, ainsi que la teneur, la nature et la pression des hydrocarbures qui y sont piégés. Le spécialiste est alors en mesure de sélectionner les zones du bassin étudié présentant le meilleur potentiel pétrolier.

L'exploitation pétrolière du bassin peut alors prendre plusieurs formes, notamment :

- la réalisation de forages d'exploration dans les différentes zones sélectionnées comme présentant le meilleur potentiel, afin de confirmer ou infirmer le potentiel estimé préalablement, et d'acquérir de nouvelles données pour alimenter de nouvelles études plus précises,
- la réalisation de forages d'exploitation (puits producteurs ou injecteurs) pour la récupération des hydrocarbures présents au sein du bassin sédimentaire dans les zones sélectionnées comme présentant le meilleur potentiel.

**Produit programme d'ordinateur**

En outre, l'invention concerne un produit programme d'ordinateur téléchargeable depuis un réseau de communication et/ou enregistré sur un support lisible par ordinateur et/ou exécutable par un processeur selon la revendication 5.

**Exemple d'application**

Les caractéristiques et avantages du procédé selon l'invention apparaîtront plus clairement à la lecture de l'exemple d'application ci-après.

Le bassin sédimentaire étudié correspond au bassin du Levant, en mer Méditerranée. Ce bassin fait actuellement l'objet d'une exploration pétrolière intense, et la présence de réservoirs de méthane « sec » (presque pur) est maintenant avérée. La pureté de ce gaz fait penser à une origine biogénique. L'application de la présente invention, par la prise en compte du transport possible du gaz biogénique par advection, vise à une prédiction plus fiable de la position des gisements d'intérêt économique.

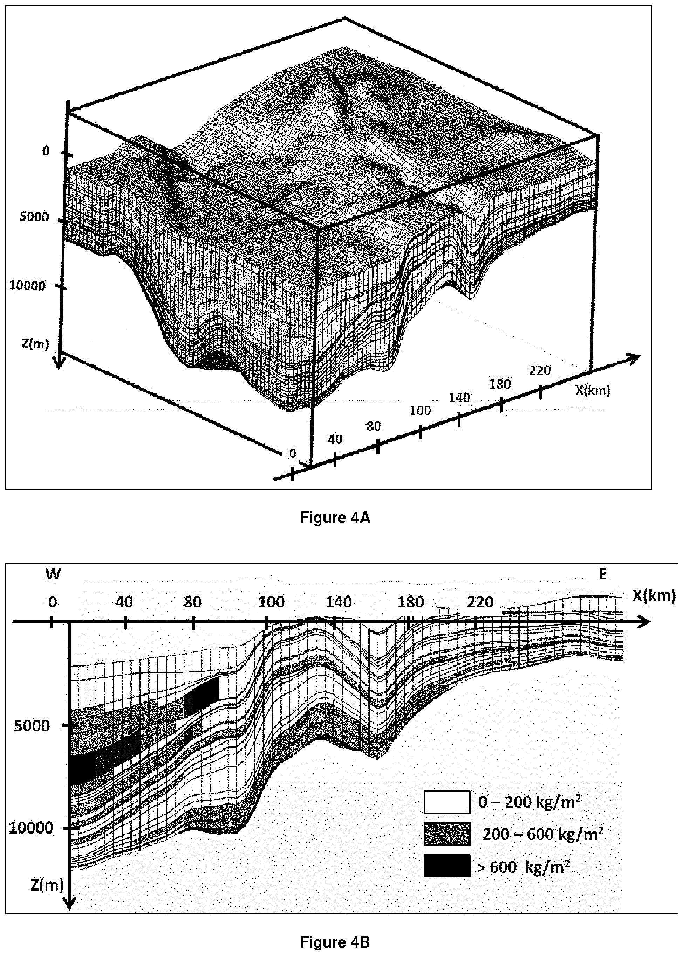

Une représentation maillée de ce bassin est présentée en Figure 4A. Le bassin couvre une surface de 50000 km$^2$ environ, pour une profondeur dépassant localement 10km. Le bassin est discrétisé à l'aide de 30 couches, et selon 122880 mailles.

La reconstruction structurale de ce bassin a été mise en oeuvre avec une méthode de « backstripping », sur une période de 299 millions d'années, correspond à l'âge du bassin.

Seule la formation de gaz biogénique primaire a été prise en compte lors de la mise en oeuvre de la présente invention, c'est-à-dire que l'on n'a pas tenu compte d'une éventuelle formation de gaz par biodégradation secondaire.

Par ailleurs, l'adsorption du gaz biogénique dissous n'a pas été prise en compte lors de cet exemple de mise en oeuvre de l'invention.

Les valeurs des paramètres utilisés pour la modélisation de la production de gaz biogénique par biodégradation primaire (cf équation 1) sont les suivants :

- TOC initial (charge en matière organique des sédiments au moment du dépôt) : 1% dont 60% de réfractaire à la dégradation bactérienne, 30% nécessitant une transformation thermique préalable et 10% directement utilisable par les micro-organismes,

- $K_M$ : 30 mM,

- $r$ : 0,16 Ma$^{-1}$,

- $b$ : -0,95,

- $a_0$ : 30000 a,

- $\lambda$ : -369,33 K$^2$.

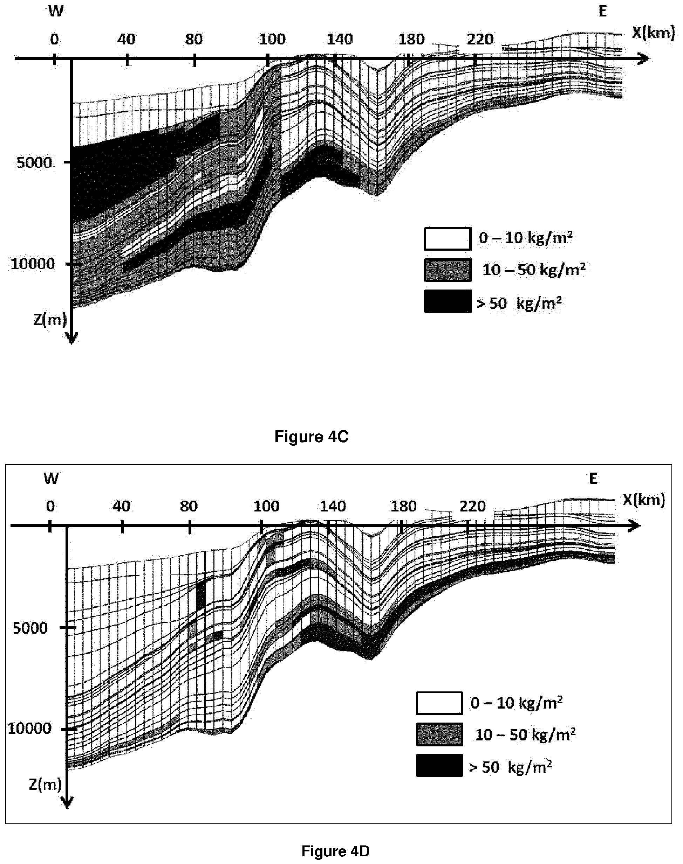

Les Figures 4B, 4C et 4D présentent des résultats obtenus par le procédé selon l'invention, appliqué depuis la naissance du bassin à l'actuel, soit pour une durée de simulation de 299 millions d'années, découpée en 27 évènements de migration et plusieurs centaines de pas de temps. Les résultats sont présentés dans ces Figures pour une même section verticale traversant le bassin, formée par un axe vertical (Z) et un axe est (E)/ouest (W)/ .

La Figure 4B présente la masse cumulée de méthane produite dans chaque maille par unité de surface de la couche, et pour toute la durée de la simulation. On observe que la zone de production maximale de gaz biogénique se situe à l'ouest (W) du bassin, correspondant aux zones de dépôt majeures de la matière organique.

La Figure 4C présente la masse cumulée de gaz dissous dans chaque maille par unité de surface de la couche, et pour toute la durée de la simulation. On observe que les plus grosses quantités de gaz dissous se trouvent à l'ouest (W) du bassin, dans les zones les plus épaisses du bassin, mais également là où la production de gaz biogénique est la plus importante.

La Figure 4D présente la masse cumulée de méthane libérée sous forme de gaz libre, obtenue après dissolution du gaz biogénique puis transport par advection, dans chaque maille et par unité de surface de la couche, et pour toute la durée de la simulation. On observe que la production de gaz libre ne se situe pas dans la zone de production maximale de gaz biogénique, mais dans les zones les moins profondes situées à l'est (E) du modèle. Cette tendance montrée par le procédé selon l'invention peut être attribuée au transport par advection du gaz biogénique dissous dans l'eau porale, depuis les zones profondes du bassin à situées à l'ouest (W) vers les zones les moins profondes situées à l'est (E), sous l'effet de la compaction dues à la surcharge sédimentaire à l'ouest (W), propice au déplacement de l'eau porale. Le fait que les sédiments situés à l'est (E) séjournent plus longtemps dans une gamme de profondeurs assez faibles et dans une gamme de température propice à la génération de gaz biogénique, mais défavorable à sa solubilisation, contribue également à ce résultat.

Ainsi, l'application du procédé selon l'invention indique que, pour ce bassin, les couches les plus profondes sont les plus favorables à la production de gaz, et que ce gaz va, par un phénomène d'advection, alimenter des gisements de méthane situés à des plus faibles profondeurs.

Ainsi, le procédé selon l'invention, par la prise en compte du transport par advection d'au moins une partie du gaz biogénique dissous dans l'eau, permet une localisation fiable de potentiels gisements d'hydrocarbures.

## Revendications

**1.** Procédé d'exploitation d'un bassin sédimentaire comportant des hydrocarbures, au moyen d'un simulateur de bassin mis en oeuvre par ordinateur permettant de reconstituer, pour une succession de pas de temps, les processus géologiques et géochimiques ayant affecté ledit bassin depuis un temps géologique t jusqu'au temps actuel, à partir de mesures de propriétés relatives au bassin, dans lequel :

A. on construit une représentation maillée représentative dudit bassin au temps actuel à partir desdites mesures ;

B. à partir de ladite représentation maillée audit temps actuel, on construit une représentation maillée du bassin pour chacun desdits autres pas de temps par reconstruction de l'architecture dudit bassin pour lesdits autres pas de temps ;

C. au moyen dudit simulateur et desdites représentations maillées dudit bassin pour lesdits pas de temps, on réalise au moins les étapes suivantes pour chacun desdits pas de temps, depuis ledit temps géologique t jusqu'audit temps actuel, et pour chaque maille de ladite représentation maillée :

i. on détermine au moins une quantité de gaz biogénique produite dans ladite maille audit pas de temps ;

**caractérisé en ce que** :

ii. on détermine au moins une quantité de gaz biogénique dissous dans l'eau présente dans ladite maille au dit pas de temps, et on en déduit une quantité de gaz biogénique libre dans ladite maille audit pas de temps, ladite quantité de gaz biogénique dissous dans l'eau présente dans ladite maille au dit pas de temps étant déterminée de la manière suivante :

a) on calcule une quantité de gaz biogénique totale dans ladite maille pour ledit pas de temps, en sommant ladite quantité de gaz biogénique produite audit pas de temps et la quantité de gaz biogénique présente dans ladite maille au pas de temps précédent ;

b) on détermine une quantité maximum de gaz biogénique solubilisable dans l'eau dans ladite maille et audit pas de temps;

c) on détermine ladite quantité de gaz biogénique dissous dans ladite maille pour ledit pas de temps en prenant la valeur minimale entre ladite quantité de gaz biogénique totale et ladite quantité maximum de gaz biogénique solubilisable.

iii. on prend au moins en compte le transport par advection de la quantité de gaz biogénique dissous dans l'eau de ladite maille audit pas de temps ;

D. on sélectionne les zones dudit bassin correspondant à des mailles de ladite représentation maillée dudit bassin audit temps actuel comportant des hydrocarbures, et on exploite le dit bassin en fonction desdites zones sélectionnées.

2. Procédé selon la revendication précédente, dans lequel on détermine une quantité de gaz biogénique d'origine primaire et/ou d'origine secondaire.

3. Procédé selon l'une des revendications précédentes, dans lequel on détermine, pour chacun desdits pas de temps et dans chacune desdites mailles de ladite représentation maillée obtenue pour ledit pas de temps, ladite quantité dudit gaz biogénique libre par différence entre ladite quantité totale de gaz biogénique présente dans ladite maille audit pas de temps et ladite quantité de gaz biogénique dissous dans l'eau de ladite maille audit pas de temps.

4. Procédé selon l'une des revendications précédentes, dans lequel on détermine en outre une quantité de gaz biogénique adsorbable dans ladite maille audit pas de temps, et on détermine ladite quantité de gaz biogénique dissous dans ladite maille et pour ledit pas de temps en considérant que ledit gaz biogénique est préférentiellement adsorbé, puis dissous.

5. Produit programme d'ordinateur téléchargeable depuis un réseau de communication et/ou enregistré sur un support lisible par ordinateur et/ou exécutable par un processeur, comprenant des instructions de code de programme qui, lorsque ledit programme est exécuté sur un ordinateur, conduisent celui-ci à mettre en oeuvre les étapes A) à C) du procédé selon l'une des revendications précédentes .

**Patentansprüche**

1. Verfahren zur Erschließung eines Kohlenwasserstoffe enthaltenden Sedimentbeckens mittels eines von einem Computer ausgeführten Beckensimulators, der es ermöglicht, für eine Abfolge von Zeitschritten die geologischen und geochemischen Prozesse, die sich von einer geologischen Zeit t bis zur gegenwärtigen Zeit auf das Becken ausgewirkt haben, anhand von Messungen von das Becken betreffenden Eigenschaften zu rekonstruieren, bei dem:

A. man eine Netzdarstellung, die für das Becken zur gegenwärtigen Zeit repräsentativ ist, anhand der Messungen erstellt;

B. man anhand der Netzdarstellung zur gegenwärtigen Zeit eine Netzdarstellung des Beckens für jeden der anderen Zeitschritte durch Rekonstruktion der Architektur des Beckens für die anderen Zeitschritte erstellt;

C. man mittels des Simulators und der Netzdarstellungen des Beckens für die Zeitschritte mindestens die folgenden Schritte für jeden der Zeitschritte, von der geologischen Zeit t bis zur gegenwärtigen Zeit, und für jede Masche der Netzdarstellung ausführt:

i. man bestimmt mindestens eine Menge biogenen Gases, die in der Masche zu dem Zeitschritt erzeugt wird;

**dadurch gekennzeichnet, dass**:

ii. man mindestens eine Menge biogenen Gases bestimmt, das in dem zu dem Zeitschritt in der Masche vorhandenen Wasser gelöst ist, und man daraus eine Menge biogenen Gases ableitet, das in der Masche zu dem Zeitschritt frei ist, wobei die Menge biogenen Gases, das in dem in der Masche zu dem Zeitschritt vorhandenen Wasser gelöst ist, auf die folgende Weise bestimmt wird:

a) man berechnet eine Gesamtmenge biogenen Gases in der Masche für den Zeitschritt, indem man die zu dem Zeitschritt erzeugte Menge biogenen Gases und die in der Masche zu dem vorhergehenden Zeitschritt vorhandene Menge biogenen Gases addiert;

b) man bestimmt eine maximale Menge biogenen Gases, die in dem Wasser in der Masche und zu dem Zeitschritt solubilisierbar ist;

c) man bestimmt die in der Masche gelöste Menge biogenen Gases für den Zeitschritt, indem man den kleinsten Wert zwischen der Gesamtmenge biogenen Gases und der solubilisierbaren maximalen Menge biogenen Gases nimmt;

iii. man berücksichtigt mindestens den Transport durch Advektion der Menge biogenen Gases, das in dem Wasser der Masche zu dem Zeitschritt gelöst ist;

D. man wählt die Bereiche des Beckens aus, die Maschen der Netzdarstellung des Beckens zu der gegenwärtigen Zeit entsprechen, die Kohlenwasserstoffe enthalten, und man erschließt das Becken in Abhängigkeit von den ausgewählten Bereichen.

2. Verfahren nach dem vorhergehenden Anspruch, bei dem man eine Menge biogenen Gases primären Ursprungs und/oder sekundären Ursprungs bestimmt.

3. Verfahren nach einem der vorhergehenden Ansprüche, bei dem man für jeden der Zeitschritte und in jeder der Maschen der für den Zeitschritt erhaltenen Netzdarstellung die Menge des freien biogenen Gases durch Differenz zwischen der Gesamtmenge biogenen Gases, die in der Masche zu dem Zeitschritt vorhanden ist, und der Menge biogenen Gases, das in dem Wasser der Masche zu dem Zeitschritt gelöst ist, bestimmt.

4. Verfahren nach einem der vorhergehenden Ansprüche, bei dem man ferner eine in der Masche zu dem Zeitschritt absorbierbare Menge biogenen Gases bestimmt und man die Menge biogenen Gases bestimmt, die in der Masche und für den Zeitschritt gelöst ist, wobei man bedenkt, dass das biogene Gas bevorzugt absorbiert, dann gelöst wird.

5. Computerprogrammprodukt, das von einem Kommunikationsnetz herunterladbar ist und/oder auf einem computerlesbaren Datenträger gespeichert ist und/oder von einem Prozessor ausführbar ist, umfassend Programmcodeanweisungen, die, wenn das Programm auf einem Computer ausgeführt wird, diesen dazu bringen, die Schritte A) bis C) des Verfahrens nach einem der vorhergehenden Ansprüche auszuführen.

**Claims**

1. Method for performing extraction from a hydrocarbon-containing sedimentary basin, by means of a computer-implemented basin simulator allowing, for a succession of time intervals, geological and geochemical processes having affected said basin from a geological time t to the current time to be reconstructed, based on measurements of properties relative to the basin, wherein:

A. a meshed representation representative of said basin at the current time is constructed based on said measurements;

B. based on said meshed representation at said current time, a meshed representation of the basin is constructed for each of said other time intervals by reconstructing the architecture of said basin for said other time intervals;

C. by means of said simulator and of said meshed representations of said basin for said time intervals, at least the following steps are carried out for each of said time intervals, from said geological time t to said current time, and for each mesh cell of said meshed representation:

i. at least an amount of biogenic gas produced in said mesh cell in said time interval is determined;

**characterized in that**:

ii. at least an amount of biogenic gas dissolved in water present in said mesh cell in said time interval is determined, and an amount of free biogenic gas in said mesh cell in said time interval is determined therefrom, said amount of biogenic gas dissolved in water present in said mesh cell in said time interval being determined in the following way:

a) a total amount of biogenic gas in said mesh cell is computed for said time interval, by summing said amount of biogenic gas produced in said time interval and the amount of biogenic gas present in said mesh cell in the preceding time interval;

b) a maximum amount of biogenic gas dissolvable in water in said mesh cell in said time interval is determined;

c) said amount of biogenic gas dissolved in said mesh cell for said time interval is determined by taking the minimum value between said total amount of biogenic gas and said maximum amount of biogenic gas dissolvable;

iii. at least migration by advection of the amount of biogenic gas dissolved in water in said mesh cell in said time interval is taken into account;

D. regions of said basin corresponding to mesh cells of said meshed representation of said basin at said current time that contain hydrocarbons are selected, and extraction from said basin is performed depending on said selected regions.

2. Method according to the preceding claim, wherein an amount of biogenic gas of primary origin and/or of secondary origin is determined.

3. Method according to either of the preceding claims, wherein, for each of said time intervals and in each of said mesh cells of said meshed representation obtained for said time interval, said amount of said free biogenic gas is determined by determining the difference between said total amount of biogenic gas present in said mesh cell in said time interval and said amount of biogenic gas dissolved in water of said mesh cell in said time interval.

4. Method according to one of the preceding claims, wherein an amount of biogenic gas adsorbable in said mesh cell in said time interval is further determined, and said amount of biogenic gas dissolved in said mesh cell is determined, for said time interval, by considering said biogenic gas to be preferably adsorbed, then dissolved.

5. Computer program product downloadable from a communication network and/or stored on a computer-readable medium and/or executable by a processor, comprising program-code instructions that, when said program is executed on a computer, lead the latter to implement steps A) to C) of the method according to one of the preceding claims.

**Figure 1**

**Figure 2**

**Figure 3**

Figure 4A

Figure 4B

Figure 4C

Figure 4D

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 2110686 A
- WO 2014040622 A1
- WO 2003031644 A3
- US 2015066461 A
- US 2010081184 A1
- FR 2930350 A
- US 20090265152 A

**Littérature non-brevet citée dans la description**

- **DE MARSILY G.** Quantitative hydrogeology. Academic Press, 1986
- *Geochimica et Cosmochimica Acta,* 2006, vol. 70, 3369-3386
- **LANGMUIR I.** The constitution and fundamental properties of solids and liquids. part i. solids. *J. Am. Chem. Soc.,* 1916, vol. 38, 2221-95
- The finite volume method. **R. EYMARD ; T. GALLOUET ; R. HERBIN.** Handbook for Numerical Analysis. North Holland, 2000
- **I.MORETTI ; F.LEPAGE ; M.GUITON.** KINE3D: a new 3D restauration method based on a mixed approach linking geometry and geomechanics. *Oil & Gas Science and Technology - Rev.IFP,* 2006, vol. 61 (2), 277-289
- **R. SCHEICHL ; R. MASSON ; J. WENDEBOURG.** Decoupling and Block Preconditioning for Sedimentary Basin Simulations. *Computational Geosciences,* 2003, vol. 7 (4), 295-318
- **SCHNEIDER ; WOLF.** Quantitative HC potential évaluation using 3D basin modelling : application to Franklin structure, central Graben, North Sea, UK. *Marine and Petroleum Geology,* 2000, vol. 17, 841-856
- **SCHNEIDER F.** Modelling multi-phase flow of petroleum at the sedimentary basin scale. *Journal of Geochemical exploration,* 2003, vol. 78-79, 693-696
- **F. SCHNEIDER ; S. WOLF ; I. FAILLE ; D. POT.** A 3D Basin Model for Hydrocarbon Potential Evaluation : Application to Congo Offshore. *Oil & Gas Science and Technology - Rev. IFP,* 2000, vol. 55 (1), 3-13
- **STECKLER, M.S. ; A.B. WATTS.** Subsidence of the Atlantic-type continental margin off New York. *Earth Planet. Sci. Lett.,* 1978, vol. 41, 1-13
- *Petroleum migration, Geological Society, Special publication,* 1991, (59), 111-112
- **EDUARDO MARTINEZ.** *Shale Gas Evaluation-Exploration,* 27 Novembre 2012, http://www.geosoc.fr/bibliothegue-sgf/reglement-interieur/cat view/1-dossiers/17-eneraie/41-conference-les-aaz-de-schiste-ou-de-roche-mere.html
- **FRÉDERIC SCHNEIDER.** PREDICTION OF LOW-MATURITY / BIOGENIC GAS ACCUMULATIONS. *APPLICATION TO THE OFFSHORE LEBANON,* 01 Janvier 2013, https:// www.research-gate.net/publication/308648439_PREDICTION_OF LOW-MATURITY_BIOGENIC_GAS_ACCUMULAT IONS_APPLICATION_TO_THE_OFFSHORE_LEB ANON